# EUROPÄISCHE PATENTSCHRIFT

(11) **EP 4 065 335 B1**
(45) Veröffentlichungstag und Bekanntmachung des Hinweises auf die Patenterteilung: **03.09.2025**
(21) Anmeldenummer: 20800926.6
(22) Anmeldetag: 04.11.2020
(51) Int. Cl.: B29C 48/92, G01N 29/02

(54) **MESSANORDNUNG UND VERFAHREN ZUR BESTIMMUNG VON EIGENSCHAFTEN EINES ZU EXTRUDIERENDEN MATERIALS WÄHREND DER DURCHFÜHRUNG EINES SCHNECKEN-EXTRUSIONSPROZESSES**
MEASURING ARRANGEMENT AND METHOD FOR DETERMINING PROPERTIES OF A MATERIAL TO BE EXTRUDED WHILE A SCREW-EXTRUSION PROCESS IS BEING CARRIED OUT
DISPOSITIF DE MESURE ET PROCÉDÉ POUR DÉTERMINER LES PROPRIÉTÉS D'UN MATÉRIAU À EXTRUDER LORS DE LA MISE EN OEUVRE D'UN PROCESSUS D'EXTRUSION PAR VIS

(30) Priorität: 27.11.2019 DE 102019218387
(43) Veröffentlichungstag der Anmeldung: 05.10.2022
(73) Patentinhaber: Fraunhofer-Gesellschaft zur Förderung der angewandten Forschung e.V., 80686 München (DE)
(72) Erfinder: HEUER, Henning, 01109 Dresden (DE); SCHUBERT, Frank, 01109 Dresden (DE); WILD, Marcel, 01109 Dresden (DE)
(74) Vertreter: Pfenning, Meinig & Partner mbB
(86) Internationale Anmeldenummer: PCT/EP2020/080976
(87) Internationale Veröffentlichungsnummer: WO 2021/104819

(56) Entgegenhaltungen:
- WO-A1-2019/110194
- DE-A1- 102015 102 200
- DE-B4- 102015 102 200
- JP-A- H01 195 013

## Beschreibung

Die Erfindung betrifft eine Messanordnung und ein Verfahren zur Bestimmung von Eigenschaften eines zu extrudierenden Materials während der Durchführung eines Extrusionsprozesses. Dabei können beispielsweise die Dichte, die viskoelastischen Eigenschaften des zu extrudierenden Materials wie auch die Verteilung von darin enthaltenen Partikeln in verschiedenen Prozesszonen insitu vor dem Austritt aus dem jeweiligen Extruder erkannt und ggf. bei der weiteren Prozessführung berücksichtigt werden, um eine ausreichende Qualität des fertig extrudierten Produktes zu gewährleisten.

Die Erfindung kann in allen Bereichen der Extrusion eingesetzt werden, also in der Bauindustrie, der Automobilindustrie, der Luftfahrtindustrie, der Medizintechnik, der Möbelindustrie, im Messebau, in der Verpackungsindustrie, beim Agrareinsatz, bei Schlauchanwendungen bei der Granulierung, in der Kunststoffindustrie, der Futtermittel- und Lebensmittelindustrie sowie der Batteriefertigung. Sie eignet sich daher für eine Vielzahl von Produkten, z.B.
- Rohre, Stäbe (Halbzeuge)
- Profile wie Fensterrahmen, Kabelkanäle oder Dichtungen
- Ummantelungen, wie z. B. für Elektrokabel
- Schläuche
- Folien
- Laufflächen von Autoreifen
- Kleinere Autoteile (Innentürverkleidungen, Rückspiegelfassungen)
- Wischgummis beim Scheibenwischer
- Fahrradfelgen
- Keil- und Zahnriemen
- Türdichtungen
- Extrudierte Polystyrol-Hartschaumplatten (XPS)
- Blei- und Buntstifte aus Holz-Kunststoff-Verbundwerkstoffen
- Keramik, Spaltklinker, Lochziegel und im Gießerei-Formenbau
- Vorprodukte bei der Seifenherstellung
- Stearinkerzen
- Nudel-Teigwaren, Knabbergebäck, Kekse, Formfleisch
- Herstellung von Chemiefasern
- Kühlkörper
- Batteriekomponenten

Zur Homogenisierung und/oder Dispergierung von Materialien können Extruder eingesetzt werden. Diese gibt es in verschiedenen Ausführungsformen. Dazu zählen der Kolbenextruder, Planetwalzenextruder, Kaskadenextruder und der Schneckenextruder. Der Schneckenextruder kann sowohl als Transport- oder auch als Verarbeitungsextruder eingesetzt werden. Er kann nur mit einer Schnecke oder mit zwei Schnecken aufgebaut sein, somit werden die Bezeichnungen Einschnecken- und Doppelschneckenextruder verwendet. Abhängig von der Applikation können die Schnecken unterschiedliche Geometrien aufweisen. Die verschiedenen Formen zielen darauf, das Material/Extrudat mechanisch zu beeinflussen, um die gewünschten Eigenschaften zu erreichen. Letztere hängen neben den geometrischen Besonderheiten der Schnecken, auch von der Art, Menge und Zusammensetzung des Rohmaterials ab. Am Ausgang des Extruders soll das Material schließlich den gewünschten Parametern entsprechen.

Mit der beschriebenen Erfindung kann die Veränderung des zu extrudierenden Materials durch die mechanische Einwirkung der Schnecken etappenweise innerhalb des Extruders überwacht werden, unabhängig von der speziellen Art und Geometrie des (Schnecken-)Extruders. Dadurch können Material- und Zustandsveränderungen während der Extrusion besser verstanden, kontrolliert und zielgerichtet optimiert werden, wobei unnötiger Ausschuss vermieden werden kann.

Zum derzeitigen Stand werden akustische Messsysteme zur Inline-Überwachung des Extrusionsprozesses überwiegend vor dem Extruder oder an dessen Ende installiert. In diesen Bereichen wird das zu extrudierende Material hinsichtlich seiner Zieleigenschaften geprüft. Bei vorhandenen Abweichungen bzw. Materialveränderungen sind deren Ursachen nachträglich nur schwer nachzuvollziehen und nicht mehr zu beeinflussen. Eine Anpassung kann prinzipiell am Rohmaterial und an den Parametern des Extrusionsprozesses a posteriori vorgenommen werden, wobei das Ergebnis des Optimierungsprozesses erst nach einer neuen vollständigen Extrusion am extrudierten Material vorliegt. Dadurch kann es zur Herstellung von unbrauchbarem Material sowie zu einem zeit- und kostenintensiven Prozess kommen. Außerdem können Fehlerursachen schwer nachvollzogen werden, da der Einfluss der Schneckengeometrie und die dadurch veränderten Zustände des Materials unbekannt sind.

Bei einer bekannten Variante zur Inline-Prozessüberwachung innerhalb des Extruders werden Messstellen verteilt über die Besatzungslänge des Extruders vorgesehen. Als Messprinzip findet das Impuls-Durchschallungs-Verfahren Anwendung. Dafür werden pro Messstelle zwei Ultraschallwandler mitsamt geeigneten Messkanälen benötigt, wobei jeweils ein Ultraschallwandler als Sender und der Zweite als Empfänger fungiert. In einem Doppelschneckenextruder befinden sich zwei Schnecken, welche mit Förder- und Knetelementen zur Verarbeitung des Materials ausgestattet sind. Der Abstand zwischen den zwei Schnecken ist sehr gering, da nur so die gezielte Verarbeitung des Materials erreicht werden kann. Ein Durchschallungspfad zwischen den Schnecken und nur durch das Extrudat ist mit diesem bekannten Aufbau nicht umsetzbar. Als mögliche Lösung dieses Problems wurden in den Bereichen der Messstellen, die Förder- und Mischelemente der Schnecken durch Distanzhülsen ersetzt. Diese stellen ein Rundmaterial mit geringerem Durchmesser dar. Die Länge dieser Distanzhülsen entspricht der Fensterlänge einer Messstelle. Damit wird es ermöglicht, dass zwischen den Schnecken ein Durchschallungspfad nur durch das Extrudat entsteht und das Impuls-Durchschallungs-Verfahren angewendet werden kann.

Nachteilig daran ist die unmittelbare Beeinflussung des Prozesses. In den Bereichen der Messstellen wird das Extrudat nicht weiterverarbeitet, wodurch der Homogenisierungs- und Dispergierungsvorgang unterbrochen wird. Es kann daher zu einer unerwünschten Materialveränderung in dieser Ruhephase im Bereich einer Messstelle kommen. Aufgrund der Distanzhülsen sind Sonderanfertigungen der Schnecken notwendig, was eine flexible Anpassung auf andere Materialsysteme und andere Extruderarten erheblich erschwert bzw. ganz unmöglich macht.

So ist aus WO 2019/110194 A1 eine Technik zur Überwachung eines Extruders bzw. einer Spritzgießmaschine bekannt.

Es ist daher Aufgabe der Erfindung, Möglichkeiten für eine Inline-Zustandsüberwachung des zu extrudierenden Materials im Inneren eines Schneckenextruders anzugeben, wobei anregende Schallwellen in einer Schnecke (bzw. den Schnecken) selbst angeregt und geführt werden können.

Erfindungsgemäß wird diese Aufgabe mit einer Messanordnung, die die Merkmale des Anspruchs 1 aufweist, gelöst. Anspruch 5 definiert ein Verfahren. Vorteilhafte Ausgestaltungen und Weiterbildungen der Erfindung können mit in untergeordneten Ansprüchen bezeichneten Merkmalen realisiert werden.

Bei der Erfindung ist in einem Gehäuse in einer rohrförmigen Führung mindestens eine Extruderschnecke drehbar gelagert und mit einem Rotationsantrieb verbunden. Zu extrudierendes Material ist der rohrförmigen Führung an einer Stirnseite zuführbar und an einer dieser gegenüberliegend angeordneten Abführung als fertig extrudiertes Material abführbar.

Entlang der Längsachse der Extruderschnecke sind mehrere erste Schallwandler, die zur Detektion von Schallwellen, die während des Extrusionsprozesses als Prozessgeräusche durch den Extrusionsprozess generiert und/oder von einem an einer Stirnseite der rohrförmigen Führung angeordneten zweiten Schallwandler emittiert werden, ausgebildet sind, in vorgebbaren definierten Abständen unmittelbar an der Wandung der rohrförmigen Führung oder in eingebrachten Messfenstern an Messpositionen angeordnet. Vom zweiten Schallwandler in Richtung der Längsachse der Extruderschnecke gesendete, durch das in der rohrförmigen Führung in einem Knetraum vorhandene extrudierte Material emittierte Schallwellen können mit ersten Schallwandlern detektiert werden. Die Schallwellen werden demnach zuerst in die Extruderschnecke eingekoppelt bevor sie über das extrudierte Material übertragen werden.

Somit können Schallwellen auch durch das zu extrudierende Material geführt und von den Eigenschaften des zu extrudierenden Materials in der jeweiligen Prozesszone, die bevorzugt in Förderrichtung des zu extrudierenden Materials zwischen zwei Messpositionen, an denen jeweils ein erster Schallwandler angeordnet ist, beeinflusst werden. dadurch können typische Eigenschaften des zu extrudierenden Materials in der entsprechenden Prozesszone erkannt werden. Dies trifft bei entsprechender Anordnung von ersten Schallwellen auch auf weitere Prozesszonen zu, die in Förderrichtung hintereinander angeordnet sein können.

Erste Schallwandler können entlang einer Achse in einer Reihenanordnung an der Außenwand der rohrförmigen Führung, in der mindestens eine rotierende Schnecke angeordnet und drehbar gelagert ist, angeordnet sein. Die Abstände zwischen ersten Schallwandlern können, müssen aber nicht äquidistant sein. Es ist nur von Bedeutung, dass die Abstände zwischen Messpositionen oder die Position der einzelnen Messpositionen bekannt sind.

Erste Schallwandler können in verschiedenen Winkelausrichtungen über den Umfang der rohrförmigen Führung verteilt angeordnet sein. Sie können beispielsweise spiralförmig oder sternförmig angeordnet sein, sollten aber in Förderrichtung hintereinander angeordnet sein. Die Positionen und/oder Abstände erster Schallwandler sollten bekannt sein, so dass dies bei der Auswertung der mit ihnen detektierten Messsignale berücksichtigt werden kann.

Prinzipiell kann ein zweiter Schallwandler im Bereich einer in Förderrichtung vorn oder am Ende des Extrusionspozesses angeordneten Stirnseite, bevorzugt aber im Bereich eines Antriebs für die Schnecke(n) am bzw. vor Beginn des Extrusionsprozesses angeordnet sein.

Aktive Flächen der ersten Schallwandler können über ein Schutz- und Anpassfenster oder eine Schutzschicht an das zu extrudierende Material im Inneren der rohrförmigen Führung ankoppeln.

Die über die gesamte Länge der jeweiligen Schnecke austretenden sogenannten Leaky-Waves können von seitlich am oder in der Wand der rohrförmigen Führung angebrachten breitbandigen ersten Schallwandlern detektiert und analysiert werden. Der Ansatz benötigt keinen extra zu schaffenden, ungestörten Durschschallungspfad sondern nutzt den bereits vorhanden Weg zwischen Schneckenoberfläche und Innenwand der rohrförmigen Führung zum Durchtritt durch das zu extrudierende Material während des Extrusionsprozesses. Er ist daher prinzipiell für alle (Schnecken)Extruderarten geeignet und kann durch Änderung der Anregungsschallfrequenzen auf eine Vielzahl unterschiedlicher Extrudergeometrien und zu extrudierenden Materialien angepasst werden.

Die Anpassung der Anregungsfrequenz kann durch den Einsatz verschiedener i.A. schmalbandig ausgelegter, anregender zweiter Schallwandler erfolgen. Die ersten Schallwandler können dagegen breitbandig ausgelegt sein, so dass sie auch beim Wechsel des jeweiligen Aktuators unverändert beibehalten werden können. Ggf. ist aber auch hier ein Wechsel der ersten Schallwandler möglich. Dabei kann man unter schmalbandig einen Frequenzbereich mit einer Bandbreite kleiner gleich 20% und unter breitbandig einen Frequenzbereich mit einer Bandbreite von größer gleich 80% verstehen.

Der Ansatz ermöglicht es, während des Prozesses Schallwellenmesssignale zu generieren und auszuwerten, die quasi in Echtzeit in den Extrusionsprozess zurückgekoppelt werden können, um die Qualität und Ausbeute des fertig extrudierten Materials zu optimieren.

Im Folgenden sollen einzelne Aspekte, wie z.B. die Schallwandlerart, mechanische Anbringung und Konfiguration der Schallwandler, das Messprinzip und die Signalverarbeitung näher beleuchtet werden.

Die Emission von Schallwellen sollte durch eine geeignete Anregung im Antriebsbereich der jeweiligen Schnecke(n), z.B. auf piezoelektrischer oder EMAT (**E**lectro**M**agnetic **A**coustic **T**ransducer)-Basis erfolgen, wobei die Mittenfrequenz und Frequenzbandbreite der Schallwellen auf die jeweilige Anwendung und die verwendeten Materialien angepasst werden können. Durch die Erregung mit breitbandigem Impulsschall oder schmalbandigen Burstsignalen dringen mechanische Wellen zunächst in die Schnecke(n) und dann in das zu extrudierende Material selbst ein, durchlaufen es und können an oder in der Extruderwand detektiert werden. Bei der Emission mittels EMAT kann ausgenutzt werden, dass Schallwellen mittels elektromagnetisch initiierter Wirbelstromfelder in Metall emittiert werden, ohne das ein direkter mechanischer Kontakt und auch kein Koppelmittel erforderlich sind.

Abhängig von den zu extrudierenden Materialien können Schallwander mit unterschiedlichen Parametern eingesetzt werden, wobei Frequenzen im Kilohertz- bis hin zum Megahertzbereich, je nach Materialdämpfung und Laufstrecke eingesetzt werden. Der Schwingerdurchmesser der ersten Schallwandler kann unter Berücksichtigung der mechanischen Anbringung ebenfalls variieren. Auf der Empfangsseite, an der eine Detektion erfolgt, besteht die Möglichkeit, unterschiedliche Arten von ersten Schallwandlern für eine Detektion einsetzen zu können. Dazu zählen beispielsweise Senkrechtwandler, Winkelprüfköpfe, S/E-Wandler, fokussierte Wandler, Phased-Array-Wandler, luftgekoppelte Ultraschallwandler, EMAT-Wandler etc. Es können aber z.B. auch Laser-Ultraschall-Detektoreinheiten eingesetzt werden.

Die Schallwandler können derart in den Extruder integriert werden, dass mindestens ein zweiter Schallwandler im Antriebsbereich der Schnecke(n) aktiv Schallwellen in die Schnecke(n) emittiert und mehrere andere breitbandige erste Schallwandler, die entlang der Extruderlängsachse an der äußeren Begrenzung oder in inneren Messkanälen angeordnet sein können, die Schallwellen detektieren können. Die von einem zweiten Schallwandler emittierten Schallwellen breiten sich in der gesamten Schnecke aus, treten dabei zum Teil auch in das umgebende zu extrudierende Material ein und können nach dem Durchgang durch das zu extrudierende Material an den dazu ausgebildeten ersten Schallwandlern detektiert und mittels einer elektronischen Auswerteeinheit die mit ersten Schallwandlern detektierten Messsignale zur Bestimmung von Eigenschaften des zu extrudierenden Materials während des Extrusionsprozesses an den vorgegebenen Messpositionen ausgewertet werden.

Zur Realisierung solcher Messungen können die ersten Schallwandler unterschiedlich zum Knetraum, in dem das zu extrudierende Material bewegt und beeinflusst wird, positioniert werden. Zur Realisierung der mechanischen Instrumentierung können speziell dafür eingebrachte Messfenster vorgesehen werden. In diesen Ausführungsformen wird der Extrusionsprozess innerhalb des Knetraums, im Gegensatz zum Stand der Technik, nicht beeinflusst. Zudem kann auf Messfenster auf der Anregungsseite verzichtet werden. In bzw. an den Messpositionen wird eine mechanische Befestigung der detektierenden Schallwandler realisiert, wobei die aktiven Flächen dieser Schallwandler über ein Schutz- und Anpassfenster oder eine entsprechende Schutzschicht an das zu extrudierende Material im Inneren ankoppeln können. Dabei können die detektierenden ersten Schallwandler auf identische oder unterschiedliche Abstände zur Extruderlängsachse eingestellt werden, wobei eine Einschränkung des von den/der Schnecke(n) beanspruchten Volumens ausgeschlossen sein sollte.

Neben der oben beschriebenen aktiven Variante, bei der der bevorzugt im Antriebsbereich der jeweiligen Schnecke installierte, Schallwellen emittierende zweite Schallwandler als Sender aktiv anregt und die ersten Schallwandler die Signale empfangen und detektieren, kann als weitere Ausführungsform auch eine rein passive Variante realisiert werden, bei der alle entlang der Extruderlängsachse angebrachten ersten Schallwandler lediglich als Detektor arbeiten und die Prozessgeräusche, die in Form von Schallwellen bei der Extrusion auftreten, detektieren und auswerten. Bei beiden Varianten können die Anzahl und/oder die Abstände der detektierenden ersten Schallwandler abhängig von der Besatzungslänge des Extruders und der jeweiligen zu überwachenden Applikation, die insbesondere von den Betriebsparametern des jeweiligen Extruders und den Eigenschaften des jeweiligen zu extrudierenden Materials abhängen, gewählt werden. Dazu können so viele erste Schallwandler und ggf. Messfenster eingesetzt und in Prozesszonen angeordnet werden, wiesich die Materialeigenschaften bei der Extrusion signifikant verändern.

Für die mechanische Ankopplung der Schallwandler kann Wasser, hochviskoses Koppelgel, Klebstellen, mechanischer Druck oder auch ganz berührungslos (luftgekoppelter Ultraschall, Laser-Ultraschall) eingesetzt bzw. angewendet werden.

Gegenüber dem Stand der Technik sind die Schneckengeometrie und somit der Verarbeitungsprozess des zu extrudierenden Materials nicht beeinflusst. Bei der zugrundeliegenden Erfindung können die durch einen Schallwandler im Antriebsbereich der Schnecke(n) aktiv in die diese eingebrachten akustischen Wellen oder die rein passiv akustischen Signale des Extruders mit den auf der Besatzungslänge der rohrförmigen Führung des Extruders instrumentierten ersten Schallwandlern detektiert und zur Bewertung des Extrusionsprozesses genutzt werden. Durch die Auswahl von breitbandigen Schallwandlern kann es außerdem ermöglicht werden, ohne mechanischen Zusatzaufwand eine Anpassung auf verschiedene Materialsysteme vorzunehmen.

Zur Bewertung des Extrusionsprozesses können die aus der Schnecke austretenden und von den ersten Schallwandlern detektierten akustischen Signale genutzt werden. Die Anregung von Schallwellen kann dabei aktiv über die Schnecke(n) oder rein passiv durch akustische Prozessgeräusche erfolgen.

Eine lokale Transmissionsmessung zwischen zwei direkt gegenüberliegenden Schallwandlern, wie sonst üblich, findet bei der Erfindung nicht statt, da die Schallwellen zunächst von der Schnecke emittiert werden, sich von dort ausbreiten und erst dann - auf indirektem Wege - zu den einzelnen ersten Schallwandlern gelangen.

Durch die verschiedenen Laufwege von Schallwellen zu den detektierenden ersten Schallwandlern tragen die Schallwellen dennoch lokale Informationen über die unterschiedlichen Prozesszonen mit sich, die mittels geeigneter Auswerteverfahren auf Basis von Kreuzkorrelationen oder anderer Laufzeit- und Dämpfungsmessungen ermittelt und berücksichtigt werden können.

Mittels einer Kreuzkorrelation zwischen je zwei an verschiedenen Messpositionen detektierten Schallwandlermesssignalen kann eine Impulsübertragungsfunktion zwischen beiden Messpositionen erhalten werden. Dadurch kann eine lokale Charakterisierung des zu extrudierenden Materials zwischen jeweils zwei Messpositionen entlang der Extruderlängsachse erfolgen. Die Charakterisierung des zu extrudierenden Materials kann über übliche akustische Parameter, wie z.B. Schallgeschwindigkeit und Dämpfung, wobei i.A. diese Parameter der detektierten Schallwellen spektroskopisch, also frequenzaufgelöst ausgewertet werden, erreicht werden. Neben der Kreuzkorrelation können auch konventionelle Laufzeit- und Dämpfungsmessungen durchgeführt werden.

Auf Basis der akustischen Parameter können lokale gemittelte Materialeigenschaften, wie Dichte, Viskosität oder Partikelgröße ermittelt werden.

Die Datenerfassung während des Extrusionsprozesses sowie die Inlineauswertung der Signale können mit einer geeigneten Software erfolgen, welche die gewünschten Materialparameter in Echtzeit ausgibt. Auf Basis dieser Materialparameter können unmittelbar Prozessanpassungen vorgenommen werden.

Sowohl im aktiven als auch im passiven Messmodus werden die sich ausbreitenden Schallwellen aufgrund der komplexen Geometrie der Schnecke(n) und deren permanenter Bewegung während des Extrusionsprozesses i.A. einen stochastischen Charakter aufweisen. Aus diesem Grunde können insbesondere auch statistische Parameter der Schallwellenmesssignale, wie z.B. Mittelwerte, Standardabweichungen, Verteilungsfunktionen und deren höhere Momente zur Auswertung herangezogen werden.

Nach dem Stand der Technik kommt aber ein Transmissionsansatz zum Einsatz, bei dem nichtstatistische impulsartige Signale ausgewertet werden.

Gegenüber den bisher eingesetzten Methoden kann durch die zugrundeliegende Erfindung eine Bewertung der Zustandsänderung über den gesamten Extrusionsprozess ermöglicht werden, ohne dabei den Prozess, bspw. aufgrund von Geometrieänderungen der Schnecken bzw. ohne Einbringen von Distanzhülsen, zu beeinflussen. Außerdem ermöglicht das erfindungsgemäß angewendete Messprinzip eine größere Flexibilität bei der Messsystemanpassung auf andere Materialsysteme und lässt sich zudem bei allen (Schnecken- )Extruderarten anwenden.

Im Gegensatz zu den bisherigen Offline-Messungen am Rohmaterial oder am fertigen Extrudat handelt es sich bei der Erfindung um eine prozessintegrierte Inlinemessung, die eine bessere Ausbeute, erhöhte Materialqualität und eine niedrigere Ausschussquote produziert. Weiterhin kann die Rückverfolgbarkeit von Materialeigenschaften im Rahmen von sicherheitsrelevanten Industrie 4.0-Anwendungen unterstützt werden.

Die Erfindung kann Anwendung im Herstellungsprozess von Batteriezellen finden. Eine Batterie besteht aus zwei Elektroden, einem Separator und einem Elektrolyten. Die Leistungsfähigkeit ist dabei unter anderem abhängig von dem Elektrodenmaterial. Die Erfindung kann bei der Herstellung des Elektrodenmaterials eingesetzt werden. Dort wird eine Trägerfolie (typischerweise Aluminium- oder Kupferfolie) mit Elektrodenmaterial beschichtet. Bei der Herstellung von Elektrodenmaterial ist es wichtig, dass das fertige Material einen homogenen Charakter sowie die geforderten Parameter aufweist. Dabei sind Parameter, wie Viskosität, Dichte und Partikelgröße von großer Relevanz. Häufig wird das Elektrodenmaterial unter Verwendung eines Extrusionsprozesses hergestellt. Durch die Überwachung dieses Herstellungsprozesses mit der zugrundeliegenden Erfindung wird es ermöglicht, die Materialveränderung während der Extrusion aufzunehmen und gegebenenfalls durch die Zugabe oder Drosselung einzelner Materialkomponenten zu optimieren. Dabei werden die akustischen Parameter Schallgeschwindigkeit und -dämpfung verwendet, um auf elastische und viskoelastische Moduln des zu extrudierenden Materials zu schließen.

Nachfolgend soll die Erfindung beispielhaft näher erläutert werden.

Dabei zeigt:
- Figur 1: in schematischer Darstellung ein Beispiel einer erfindungsgemäßen Messanordnung und
- Figur 2: das Detail A von Figur 1 in vergrößerter Darstellung.

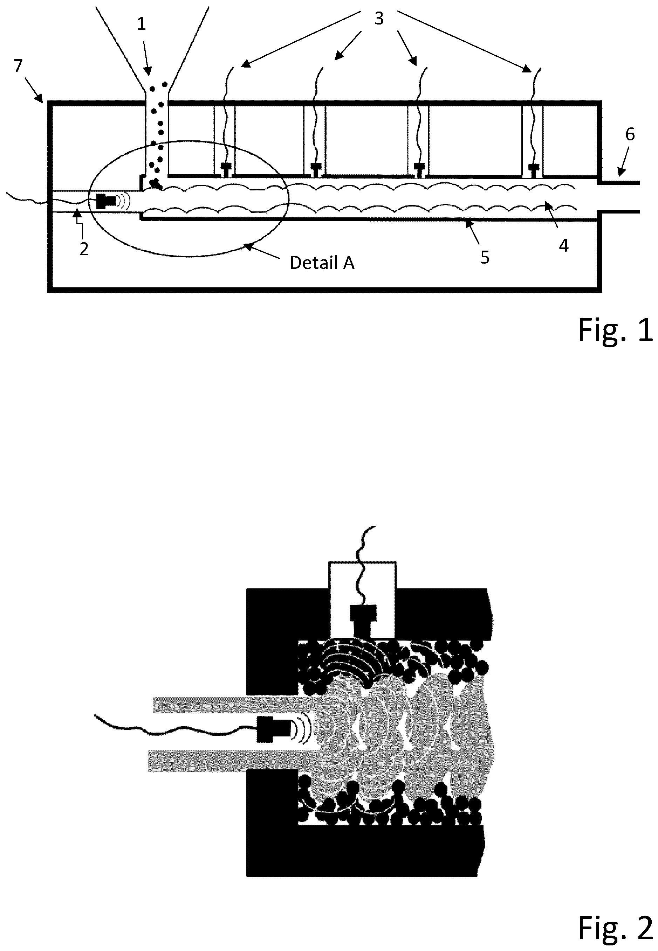

In Figur 1 ist ein Beispiel einer erfindungsgemäßen Messanordnung an einem Extruder 7 gezeigt. Bei diesem Beispiel ist eine Schnecke 4 in einer rohrförmigen Führung 5 drehbar gelagert und wird mit einem nicht dargestellten Drehantrieb angetrieben.

Zu extrudierendes Material 1 wird über eine Zuführung in einen Knetraum, der innerhalb der rohrförmigen Führung 5 angeordnet und mittels eines Spaltes zwischen der Innenwand der rohrförmigen Führung und der Außenwand der Schnecke 4 gebildet ist, eingeführt. Bei zwei Schnecken, die um parallel zueinander ausgerichtete Rotationsachsen rotieren und nebeneinander angeordnet sind, kommt zum Knetraum noch das Volumen im Spalt zwischen den äußeren Oberflächen der Schnecken hinzu.

Mittels der Drehung der Schnecke wird das zu extrudierende Material durch die rohrförmige Führung 5 bis zum Austritt 6 gefördert.

An der äußeren Wand der rohrförmigen Führung 5 sind bei diesem Beispiel vier erste Schallwandler 3 angeordnet, mit denen Schallwellen detektiert werden können. Die vier ersten Schallwandler 3 sind mittels Leitungen, die durch Kanäle aus dem Extruder 7 zu einer nicht dargestellten elektronischen Auswerteeinheit geführt sind, mit der elektronischen Auswerteeinheit, mit der eine frequenzaufgelöste Auswertung der an den Messpositionen der ersten Schallwandler 3 detektierten Schallwellen durchgeführt wird, verbunden.

Bei dem gezeigten Beispiel ist ein zweiter Schallwandler 2 in die rohrförmige Führung 5 im Bereich des nicht dargestellten Drehantriebs der Schnecke 4 angeordnet, mit dem Schallwellen in die Schnecke 4 und das zu extrudierende Material 1 emittiert werden. Dabei können Schallwellen unterschiedlicher Frequenz emittiert werden, die das jeweilige zu extrudierende Material 1 berücksichtigen. Die Frequenz kann aber auch so gewählt werden, dass sie auf eine bestimmte Messposition, an der ein erster Schallwandler 3 angeordnet ist, optimiert ist. Dazu können die Eigenschaften des zu extrudierenden Materials 1 in der dazugehörigen Prozesszone und/oder der Abstand zwischen dem zweiten Schallwandler 2 und dem entsprechenden dort angeordneten ersten Schallwandler 3 berücksichtigt werden.

Bei der Auswertung der mit den ersten Schallwandlern 3 detektierten Schallwellenmesssignale wird wie folgt vorgegangen:
Zu jedem vorgegeben Zeitpunkt tᵢ, i = 1,...N
- Filterung der Messsignale, um ggf. hochfrequentes Rauschen zu entfernen.
- Kreuzkorrelation der Messsignale von verschiedenen ersten Schallwandlern 3, um die Impulsübertragungsfunktionen zwischen den Messpositionen, an denen erste Schallwandler 3 angeordnet sind, zu erhalten. Alternativ dazu kann eine direkte Auswertung der Einzel-Messsignale ohne Kreuzkorrelation oder alternativ dazu eine statistische Auswertung der Einzelmesssignale hinsichtlich der Momente ihrer Verteilung durchgeführt werden.
- Im Falle der Kreuzkorrelation sowie der direkten Signalauswertung kann eine spektrale Analyse der frequenzabhängigen Laufzeiten und Amplituden oder alternativ dazu eine nichtspektrale kumulierte Analyse durchgeführt werden.
- Vergleich der Messwertergebnisse, die an verschiedenen Messpositionen (direkte und statistische Auswertung) detektiert wurden oder der Messwertergebnisse, die sich durch Kreuzkorrelation zwischen verschiedenen Messpositionen ergeben.
- Herstellung der Korrelation der Messwertergebnisse zu relevanten Prozessparametern mit vorab aufgenommenen Kalibrierkurven, wahlweise können zeitliche Änderungen der Messergebnisse im laufenden Prozess ohne vorherige Kalibrierung berücksichtigt werden.

## Patentansprüche

1. Messanordnung zur Bestimmung von Eigenschaften eines zu extrudierenden Materials während der Durchführung eines Extrusionsprozesses in einem Extruder (7), bei dem in einem Gehäuse des Extruders (7) in einer rohrförmigen Führung (5) mindestens eine Extruderschnecke (4) drehbar gelagert und mit einem Rotationsantrieb verbunden ist, und zu extrudierendes Material (1) der rohrförmigen Führung (5) an einer Stirnseite zuführbar und an einer dieser gegenüberliegend angeordneten Abführung (6) als fertig extrudiertes Material abführbar ist, **dadurch gekennzeichnet, dass**
entlang der Längsachse der Extruderschnecke (4) mehrere erste Schallwandler (3) in vorgebbaren definierten Abständen an der Wandung der rohrförmigen Führung (5) an Messpositionen angeordnet sind, und
die ersten Schallwandler (3) zur Detektion von Schallwellen, die während des Extrusionsprozesses als Prozessgeräusche durch den Extrusionsprozess generiert und/oder von einem an einer Stirnseite der rohrförmigen Führung (5) angeordneten zweiten Schallwandler (2) in das sich durch einen in der rohrförmigen Führung vorhandenen Knetraum geförderte zu extrudierende Material in Richtung der Längsachse der Extruderschnecke (4) emittiert werden, ausgebildet sind.

2. Messanordnung nach Anspruch 1, **dadurch gekennzeichnet, dass** der zweite Schallwandler (2) im Bereich der Stirnseite der rohrförmigen Führung (5), die in Förderrichtung des zu extrudierenden Materials (1) vor oder dem Beginn des Extrusionsprozesses angeordnet ist, angeordnet ist.

3. Messanordnung nach einem der vorhergehenden Ansprüche, **dadurch gekennzeichnet, dass** erste Schallwandler (3) in verschiedenen Winkelausrichtungen über den Umfang der rohrförmigen Führung (5) verteilt angeordnet sind.

4. Messanordnung nach einem der vorhergehenden Ansprüche, **dadurch gekennzeichnet, dass** aktive Flächen der ersten Schallwandler (3) über ein Schutz- und Anpassfenster oder eine Schutzschicht an das zu extrudierende Material (1) im Inneren der rohrförmigen Führung (5) ankoppeln.

5. Verfahren zur Bestimmung von Eigenschaften eines zu extrudierenden Materials während der Durchführung eines Extrusionsprozesses mit einer Messanordnung nach einem der vorhergehenden Ansprüche, **dadurch gekennzeichnet, dass**
mit den ersten Schallwandlern (3) Laufzeiten und/oder Amplituden von Schallwellen frequenzaufgelöst detektiert und mittels einer elektronischen Auswerteeinheit Eigenschaften des zu extrudierenden Materials (1) in jeweiligen Prozesszonen, die entlang der Förderrichtung des zu extrudierenden Materials (1) angeordnet sind, bestimmt werden.

6. Verfahren nach dem vorhergehenden Anspruch, **dadurch gekennzeichnet dass** eine Kreuzkorrelation mit detektierten Schallmesssignalen, die zwischen je zwei an verschiedenen Messpositionen angeordneten ersten Schallwandlern (3) detektiert worden sind und damit eine Impulsübertragungsfunktion der Schallmesssignale, die an diesen zwei Messpositionen detektiert worden sind, erhalten wird.

7. Verfahren nach einem der zwei vorhergehenden Ansprüche, **dadurch gekennzeichnet, dass** Mittelwerte, Standardabweichungen, Verteilungsfunktionen und deren höhere Momente der detektierten Schallwellenmesssignale berücksichtigt werden.

## Claims

1. A measuring arrangement for determining properties of a material for extrusion while an extrusion process is being performed in an extruder (7), in which at least one extruder screw (4) is rotatably mounted in a tubular guide (5) in a housing of the extruder (7) and is connected to a rotary drive, and material (1) for extrusion can be fed into the tubular guide (5) at one end face and discharged as extruded material at a discharge point (6) located opposite this end,
**characterised in that**
several first sound transducers (3) are arranged at measuring positions along the longitudinal axis of the extruder screw (4) at predefined intervals on the wall of the tubular guide (5), and
the first sound transducers (3) are configured to detect sound waves which are generated by the extrusion process as process noise during the extrusion process and/or are emitted by a second sound transducer (2) arranged on an end face of the tubular guide (5) into the material for extrusion, which is conveyed through a kneading chamber present in the tubular guide, towards the longitudinal axis of the extruder screw (4).

2. Measuring arrangement according to claim 1, **characterised in that** the second sound transducer (2) is arranged in the area of the end face of the tubular guide (5), which is arranged in the direction that the material (1) for extrusion is conveyed.

3. Measuring arrangement according to one of the preceding claims, **characterised in that** first sound transducers (3) are arranged in different angular orientations distributed over the circumference of the tubular guide (5).

4. Measuring arrangement according to one of the preceding claims, **characterised in that** active surfaces of the first sound transducers (3) are coupled to the material (1) for extrusion inside the tubular guide (5) via a protective and adaptation window or a protective layer.

5. Method for determining properties of a material for extrusion while an extrusion process is being performed with a measuring arrangement according to one of the preceding claims, **characterised in that**
the propagation times and/or amplitudes of sound waves are detected in a frequency-resolved manner with the first sound transducers (3) and properties of the material (1) for extrusion are determined via an electronic evaluation unit in respective process zones which are arranged along the direction of conveyance of the material (1) for extrusion.

6. Method according to the preceding claim, **characterised in that** a cross-correlation is performed with detected sound measurement signals which have been detected between two first sound transducers (3) arranged at different measurement positions, thereby obtaining an impulse transfer function of the sound measurement signals detected at these two measurement positions.

7. Method according to one of the two preceding claims, **characterised in that** mean values, standard deviations, distribution functions and their higher moments of the detected sound wave measurement signals are taken into account.

## Revendications

1. Dispositif de mesure permettant de déterminer les propriétés d'un matériau à extruder pendant la mise en œuvre d'un procédé d'extrusion dans une extrudeuse (7), dans lequel au moins une vis d'extrudeuse (4) est montée de manière rotative dans un carter de l'extrudeuse (7) au sein d'un guide tubulaire (5) et est reliée à un entraînement rotatif, et du matériau à extruder (1) peut être amenée au guide tubulaire (5) au niveau d'une face frontale et peut être évacuée sous la forme d'une matière extrudée finie au niveau d'une sortie (6) agencée en face de ladite face frontale,
**caractérisé en ce que**
plusieurs premiers transducteurs acoustiques (3) sont agencés le long de l'axe longitudinal de la vis d'extrudeuse (4) à des distances prédéfinies sur la paroi du guide tubulaire (5) au niveau de positions de mesure, et
les premiers transducteurs acoustiques (3) sont conçus pour détecter des ondes sonores générées par le procédé d'extrusion pendant le procédé d'extrusion sous la forme de bruits de procédé et/ou émises en direction de l'axe longitudinal de la vis d'extrudeuse (4) par un deuxième transducteur acoustique (2) agencé au niveau d'une face frontale du guide tubulaire (5) dans la matière à extruder transportée par une chambre de malaxage présente dans le guide tubulaire.

2. Dispositif de mesure selon la revendication 1, **caractérisé en ce que** le deuxième transducteur acoustique (2) est agencé dans la région de la face frontale du guide tubulaire (5) qui est agencée dans la direction de transport du matériau à extruder (1) avant ou au début du procédé d'extrusion.

3. Dispositif de mesure selon l'une quelconque des revendications précédentes, **caractérisé en ce que** des premiers transducteurs acoustiques (3) sont répartis selon différentes orientations angulaires sur la périphérie du guidage tubulaire (5).

4. Dispositif de mesure selon l'une quelconque des revendications précédentes, **caractérisé en ce que** des surfaces actives des premiers transducteurs acoustiques (3) sont couplées au matériau à extruder (1) à l'intérieur du guidage tubulaire (5) par l'intermédiaire d'une fenêtre de protection et d'ajustement ou d'une couche de protection.

5. Procédé de détermination des propriétés d'une matière à extruder pendant la mise en œuvre d'un procédé d'extrusion avec un dispositif de mesure selon l'une quelconque des revendications précédentes, **caractérisé en ce que**
des temps de propagation et/ou des amplitudes d'ondes sonores sont détecté(e)s avec résolution de fréquence grâce aux premiers transducteurs acoustiques (3) et des propriétés du matériau à extruder (1) sont déterminées au moyen d'une unité d'évaluation électronique dans des zones de procédé respectives qui sont agencées le long de la direction de transport du matériau à extruder (1).

6. Procédé selon la revendication précédente, **caractérisé en ce qu'**une corrélation croisée avec des signaux de mesure sonore détectés, qui ont été détectés entre deux premiers transducteurs acoustiques (3) agencés respectivement au niveau de positions de mesure différentes, est obtenue, et une fonction de transmission d'impulsions des signaux de mesure sonore qui ont été détectés au niveau desdites deux positions de mesure est ainsi obtenue.

7. Procédé selon l'une quelconque des deux revendications précédentes, **caractérisé en ce que** des valeurs moyennes, des écarts types, des fonctions de distribution, et leurs moments les plus élevés, des signaux de mesure d'ondes sonores détectés sont pris en compte.
